# EUROPEAN PATENT APPLICATION

(11) **EP 4 736 659 A1**
(43) Date of publication of application: **06.05.2026**
(21) Application number: 24210843.9
(22) Date of filing: 05.11.2024
(51) Int. Cl.: A23C 20/00, A23C 20/02, A23J 3/14, A23L 11/40, A23L 11/50, A23L 29/00, A23L 33/185

(54) **METHOD FOR PRODUCING PLANT-BASED MILK PRODUCTS SUCH AS TOFU AND CHEESE BY COAGULATION, TRANSGLUTAMINASE TREATMENT AND OPTIONAL FERMENTATION; PRODUCTS MADE BY THIS METHOD; AND USE OF COAGULATION SALTS AND TRANSGLUTAMINASE HEREIN**

(71) Applicant: KaTech Ingredient Solutions GmbH, 23552 Lübeck (DE)
(72) Inventor: HERNANDEZ MEDINA, Jocelyn, 23552 Lübeck (DE); MAESSE, Alexander, 23552 Lübeck (DE); TIETJEN, Markus, 23552 Lübeck (DE)
(74) Representative: Freudenberger, Hendrik Roland

(57) **Abstract**

This present application describes a method for producing plant-based milk products, specifically tofu or plant-based cheese, using legume milk. The process involves heating the legume milk, adding coagulation salts and transglutaminase to form a curd, and then filtering and pressing the curd to create the final product. The coagulation salts used are magnesium or calcium salts, and the method allows for variations in the concentration of these salts, as well as the inclusion of fermenting cultures. The resulting tofu or plant-based cheese product can be further processed to achieve different textures and flavors.

## Description

### TECHNICAL FIELD

The present application generally relates to a method for producing plant-based milk products such as tofu and cheese by coagulation, transglutaminase treatment and optional fermentation. Preferably, those products are soy-free and/or allergen-fee.

### BACKGROUND OF THE INVENTION

The concept of vegan cheese dates back to ancient civilizations, where inventive cooks explored plant-based alternatives. Early Buddhist monks in China and Japan crafted tofubased products that mirrored dairy textures. These endeavors marked the rudimentary beginnings of vegan cheese development. The rise of vegetarianism in the 19th century led to plant-based cheeses appearing in health food stores and cookbooks. Simultaneously, advancements in nutritional science fueled interest in vegan cheese alternatives.

Veganism and vegetarianism surged in the mid-20th century due to ethical, health, and environmental concerns. Demand for non-dairy cheese alternatives grew, driving further exploration and innovation.

The major challenge is the inherent nature of plant proteins, which differ significantly from milk proteins. To achieve the desired consistency and flavor, different solutions have been provided so far, often incorporating starch, coconut oil, and a range of flavors.

An important step in the production of all the mentioned products is the coagulation of the proteins in the milk starting material, which can be induced by different methods.

In traditional animal milk, the casein protein coagulation can be induced by enzymes from animal origin, such as rennet, or the addition of acids, such as hydrochloric acid and gluconic acid.

Nowadays, alternatives to rennet such as plant-based enzymes or microbiological fermentation products are also available.

As casein is not present in plant-based milks, different methods are required. For soymilk and/or tofu-production, coagulation salts such as magnesium chloride or calcium sulfate have been used.

For plant-based cheeses cross-linking enzymes, such as transglutaminase have been used.

DE102015000925A1 describes a method and apparatus for producing plant-based cheese varieties through fermentation and maturation. The process expands traditional tofu production with cheese-typical maturation processes to create tofu products with special herbal flavors and oil content. The document also details the production of new flavor variants through fermentation with cheese cultures, similar to hard cheese, soft cheese, and Camembert.

The document describes a process for making vegan cheese using plant-based emulsions that are coagulated, pressed, and matured with cultures. The vegan cheese can be made to have different textures and flavors similar to traditional dairy cheeses like Gouda, Camembert, or Chester by varying the pressing pressure and maturing with specific cultures.

The process includes heating soy milk with plant oils, emulsifying, coagulating with magnesium chloride or calcium sulfate, and fermenting with lactic acid cultures or cheese cultures. The cheese can be matured at higher temperatures to reduce maturation time.

The document also details the equipment and technical procedures for producing the vegan cheese, including heating, emulsifying, coagulating, and cooling systems.

US9011949B2 describes methods and compositions for creating cheese replicas using non-dairy milks and enzymatic curdling. The document focuses on producing cheese alternatives that mimic the properties of traditional cheese without using dairy. It involves creating an emulsion of proteins and fats, inducing it to form a gel through enzymatic cross-linking or thermal denaturing, and then processing it into a cheese-like product. The emulsion may contain minimal to no animal products, with enzymes like transglutaminase used to catalyze protein cross-linking.

WO2022/117916 discloses a process for manufacturing non-dairy cheese using a homogenized emulsion of water, non-dairy protein, and vegetable fat. The process includes heat treatment, acidification, enzymatic treatment with cross-linking enzymes like transglutaminase, and pressing the curd without cutting to maintain a continuous gel network. This method results in a non-dairy cheese with a dense, elastic, and sliceable structure similar to dairy cheese, with higher hardness and less dry matter loss during whey drainage. The non-dairy cheese produced is suitable as a dairy-alternative product and addresses issues such as lactose intolerance, milk protein allergy, and environmental sustainability.

WO2022/117919 describes a process for producing a non-dairy protein gel, which can be used to create plant-based cheese alternatives. The process involves mixing water with non-dairy protein raw materials, homogenizing the mixture, heat treatment, acidification, enzymatic modification, and solidification. The non-dairy protein can come from various sources like plants, insects, algae, or microbes. The final product is a non-dairy cheese with characteristics similar to semi-hard dairy cheeses, with variations in texture, hardness, springiness, and gumminess. The non-dairy cheese can be produced in different forms such as semi-hard, ripened cheese, high solids content cheese, low-fat salad cheese, and plant-based cheese with specific recipes and processes for each type. The process includes enzymatic treatment with cross-linking enzymes, particularly transglutaminase, at specific temperatures and conditions to achieve desired textures and properties. The non-dairy cheese comprises vegetable protein, fat, water, and additional ingredients like sugar, salt, antioxidants, starter culture, flavorings, and food colorings.

There still is a need for providing methods resulting in plant-based milk products such as tofu and cheese with improved texture and taste, as well as improved nutritional and organoleptic profile.

The object of the present invention is to provide solutions for producing plant-based milk products that have a firm and elastic texture, a creamy mouthfeel, and reduced beany notes, while ensuring that they are free from allergens and/or animal products.

### SUMMARY OF THE INVENTION

Surprisingly a method comprising the following steps was able to provide plant-based milk products such as tofu and cheese fulfilling the above requirements:
a. providing a legume milk comprising a plant protein isolate or plant protein concentrate, sugar, salt, oil or fat, and water;
b. heating the legume milk to at least equal to or above 90° C and at maximum up to its boiling point;
   c1. adding a coagulation salt to the heated legume milk;
   d1. cooling the heated legume milk to equal to or below 55°C and adding a transglutaminase to the legume milk to form a curd;
      or
   c2. cooling the heated legume milk to equal to or below 55°C;
   d2. adding a coagulation salt and a transglutaminase to the legume milk to form a curd;
e. filtering the curd; and
f. pressing the filtered curd to form a tofu or plant-based cheese product.

According to the present invention the coagulation salt in the above method is a magnesium or calcium salt.

In preferred embodiments of the invention, the legume milk is homogenized in a high-speed mixing equipment before heating it.

In preferred embodiments of the invention, the legume milk is heated to 90°C, up to 95°C or to any temperature in between. This reduces the formation of milk-skin on the surface of the legume milk.

In preferred embodiments of the invention, the sugar is selected from the group consisting of dextrose, maltodextrin, sucrose, or mixtures thereof.

The used salt preferably is sodium chloride.

The fat or oil may be selected from the group consisting of rapeseed oil, sunflower oil, palm oil, soy oil, coconut fat, or combinations thereof, preferably from rapeseed oil, sunflower oil, palm oil, coconut fat, or combinations thereof, and more preferably from sunflower oil, coconut fat or combinations thereof. The use of non-soy oils makes it possible to provide an allergen-free tofu or plant-based cheese product.

The use of legume milk as defined ensures a balanced nutritional profile while maintaining the hypoallergenic and vegan properties (especially if no soy is used), catering to consumers with dietary restrictions.

The combination of coagulation salt and transglutaminase to induce the coagulation of the plant-based proteins in the legume milk, provides the advantage of efficiently forming a curd from the heated legume milk, resulting in a solidified tofu or plant-based cheese product with a firm and elastic texture making it enjoyable to consume.

The transglutaminase can also enhance the nutritional value of the tofu or plant-based cheese product as it cross-links the proteins, which may improve the digestibility and bioavailability of amino acids in the product. It also significantly reduces the off-notes and typical bitterness of legume proteins.

Different textures of the tofu or plant-based cheese product can be obtained by either using steps c1. and d1. or c2. and d2. With both options a gelled, elastic texture is achievable. Steps c.1 and d.1 may result in a hard and uneven texture, whereas steps c2. and d2 in a more soft and runny texture.

In preferred embodiments, the temperature at which the coagulation salt is added to the heated legume milk in step c1. is still at least equal to or above 70°C.

The use of steps c2. and d2. may be preferred as it is easier to handle during production, especially in the dairy industry.

The component(s) in step d1. or d2. may be added when the temperature of the legume milk is equal to 40°C or lower, preferably between 20°C and 40°C, or more preferably 25°C.

In preferred embodiments, the time for the curd formation in step d1. or d2. before the filtering is at least 15 minutes, preferably 15 minutes to 3 hours, more preferably 1.5 to 3 hours or most preferably 2 to 3 hours or 15 to 20 minutes and may take place at a temperature of between 40°C to 52°C.

This specific temperature during the curd formation may enhance the enzyme's activity, leading to improved cross-linking of proteins, which can result in a tofu or plant-based cheese product with better texture.

Furthermore, this specific temperature may prevent the denaturation of the enzyme, ensuring its efficacy and potentially reducing the quantity of enzyme required, which can be cost-effective for the production process.

In preferred embodiments of the invention, the coagulation salt is selected from the group consisting of calcium sulfate, calcium chloride, magnesium chloride, magnesium sulfate or mixtures thereof, more preferably magnesium sulfate, magnesium chloride or mixtures thereof and most preferably magnesium sulfate.

The use of magnesium sulfate or magnesium chloride as a coagulation salt provides a non-toxic, cost-effective means to induce curd formation, which can be advantageous for large-scale production and consumer health. It may also contribute additional health benefits, such as supplying an essential mineral to the diet, which can be a selling point for health-conscious consumers. The magnesium sulfate is cleaner in taste compared to magnesium chloride.

The coagulation salt may be added at a concentration of between 0.2 wt.-% to 5 wt.-%., preferably between 0.5 wt.-% to 4 wt.-%, more preferably between 0.8 wt.-% to 3 wt.-% and most preferably between 1 wt.-% to 2 wt.-%.

The precise concentration control of the coagulation salt minimizes the risk of overcoagulation or under-coagulation, resulting in a consistent product quality and texture that can enhance consumer satisfaction. It also ensures optimal coagulation efficiency, which can lead to a higher yield of the tofu or plant-based cheese product, making the process more economically viable.

In preferred embodiments of the invention, the method comprises adding a fermenting culture to the legume milk before or in step d1. or d2. and fermenting the legume milk until a specific pH under the same conditions as in step d1. or d2. The pH may depend on the product to be obtained. Halloumi cheese for example has a pH of about 5.4, whereas fermented tofu has a pH of about 4.5 and non-fermented tofu of about 7.0.

The fermentation process can contribute to the development of a unique flavor profile and potentially increase the nutritional value of the tofu or plant-based cheese product by enhancing the bioavailability of certain nutrients.

The fermenting culture may be selected from commercially available cultures such as *VEGA^{™} Premium* (mesophilic, thermophilic), *VEGA^{™} Boost,* CR-550, C502 (mesophilic, aromatic cultures) from Chr. Hansen.

The simultaneous addition of fermenting culture and transglutaminase may streamline the production process by reducing the number of steps and time required, leading to increased manufacturing efficiency. This concurrent incorporation can also promote a synergistic effect between the fermenting culture and transglutaminase, potentially improving the texture and flavor as well as shelf-life of the final product more effectively than when added separately. Furthermore, the decrease of the pH by the fermenting culture decreases the transglutaminase activity.

Without being bound to this theory, it is believed that the addition of coagulation salt and/or fermenting culture increased the interactions between the proteins by the reductions of repulsive forces, thereby leading to an increased cross-linking by the transglutaminase.

In preferred embodiments of the invention, the obtained filtered and pressed curd is incubated at 40°C to 52°C for 1.5 to 3 hours if fermenting cultures are added or not or at 6°C for 12 to 24 hours if no fermenting cultures are added.

In preferred embodiments of the invention, the plant protein isolate is selected from the group consisting of pea isolate, fava isolate, or mixtures thereof, preferably pea isolate, fava isolate or mixtures thereof.

In preferred embodiments of the invention, the plant protein concentrate is selected from the group consisting of fava concentrate, chickpea concentrate, hemp concentrate, or mixtures thereof.

The use of a variety of plant protein isolates or concentrates, such as pea, fava, chickpea, and hemp, provides flexibility in the formulation to tailor the nutritional profile and allergenicity of the tofu or plant-based cheese product to meet diverse dietary needs and preferences. Not using soy as legume protein source makes it possible to provide an allergen-free tofu or plant-based cheese product.

In preferred embodiments of the invention the legume milk comprises 3 wt.-% to 6 wt.-% plant protein isolate or plant protein concentrate.

The inclusion of 3 wt.-% to 6 wt.-% plant protein isolate plant protein concentrate in the legume milk ensures a high-quality protein content, which can contribute to the nutritional value of the resulting tofu or plant-based cheese product, making it suitable for consumers seeking protein-rich diets.

Furthermore, the amount of plant protein isolate or plant protein concentrate may impact the amount of curd formed during the process.

In preferred embodiments of the invention, the legume milk comprises 3 wt.% to 5 wt.-% fat or oil.

The presence of 3 wt.-% to 5 wt.-% fat or oil in the legume milk contributes to a creamier texture in the tofu or plant-based cheese product, which can improve mouthfeel and overall sensory experience for the consumer.

In preferred embodiments of the invention, a cheese cloth is used for the filtering of the curd in step e) before pressing.

In preferred embodiments of the invention, the legume milk further comprises components selected from the group consisting of soluble or insoluble fibers (e.g. from bamboo, pea, oat, flaxseed, citrus, wheat or psyllium), starches (e.g. native or modified starches from potato, tapioca, corn or other typical starch sources), hydrocolloids or mixtures thereof. This provides opportunities to achieve different tofu or plant-based cheese products in terms of hardness, creaminess and brittleness.

In preferred embodiments of the invention, the method may further comprise washing the tofu or plant-based cheese product with brine (NaCl-solution), drying it and ripening it under different conditions known in the prior art to obtain a ripened tofu or plant-based cheese product. This results in tofu or cheese products with different cheese aromas and increased creaminess.

In preferred embodiments of the invention, the tofu or plant-based cheese product is a hard cheese, semi-hard cheese, semi-soft cheese, soft cheese and more preferably a halloumi cheese or semi-hard cheddar with SMEAR bacteria.

The invention also provides in a further aspect thereof, a tofu or plant-based cheese product produced by the method as described in any of the embodiments above.

The tofu or plant-based cheese product has a firm and elastic texture can withstand various cooking methods without disintegrating, offering versatility in culinary applications and expanding its use in a wide range of recipes.

The firm and elastic texture of the tofu or plant-based cheese product is likely to be more palatable to consumers who prefer a meat-like chewiness, potentially increasing its acceptance among those reducing their meat consumption or following vegetarian and vegan diets.

The creamy mouthfeel enhances the sensory experience for consumers, providing a more desirable texture that may increase the product's appeal in the marketplace. It can also contribute to a perception of richness and indulgence of the product.

The creamy texture of the tofu or plant-based cheese product may allow for its use in a wider range of culinary applications, including desserts and smoothies, where a smoother consistency is preferred.

Tofu or plant-based cheese products with reduced beany notes may be more palatable to consumers who are sensitive to or dislike the characteristic bean flavor of traditional plant-based milk products, thus broadening the consumer base.

The reduction of beany notes in the tofu or plant-based cheese product can facilitate its use in a variety of dishes without the bean flavor dominating other ingredients, enhancing its versatility as a culinary ingredient. By minimizing the beany flavor, the tofu or plant-based cheese product can better absorb and complement a wide array of seasonings and sauces, potentially increasing its appeal in international cuisines where neutraltasting ingredients are preferred.

The invention also provides in a further aspect thereof, use of a coagulation salt, a transglutaminase and optionally a fermenting culture in a method for producing plant-based milk products, wherein the obtained tofu or plant-based cheese product has a firm and elastic texture, optionally compared to the same products made with only coagulation salt or transglutaminase or coagulation salt and fermenting culture or transglutaminase and fermenting culture.

In preferred embodiments of the invention, the use also results in a superior taste of the tofu or plant-based cheese product compared to the same products made with only coagulation salt or transglutaminase or coagulation salt and fermenting culture or transglutaminase and fermenting culture, preferably in significantly less off-notes such as bitterness.

Following are definitions of select terms used in this specification and other guidance for interpreting the specification.

"Plant-based milk" or "plant milk" is a plant beverage with a color resembling that of milk. Plant milks are non-dairy beverages made from a water-based plant extract for flavoring and aroma. Plant milks are consumed as alternatives to dairy milk and may provide a creamy mouthfeel. Common plant milks are almond milk, coconut milk, rice milk, and soy milk. Other plant milks include hemp milk, oat milk, pea milk, and peanut milk.

Plant milks can be made from:
Grains: barley, fonio, maize, millet, oat, rice, rye, sorghum, teff, triticale, spelt, wheat Pseudocereals: amaranth, buckwheat, quinoa
Legumes: fava, lupin, pea, peanut, soy, fava, lentil, chickpea
Nuts: almond, brazil, cashew, hazelnut, macadamia, pecan, pistachio, walnut
Seeds: chia seed, flax seed, hemp seed, pumpkin seed, sesame seed, sunflower seed
Other: coconut (fruit; drupe), banana (fruit; berry) potato (tuber), tiger nut (tuber)
"Coagulation" with regard to dairy milk or plant-based milk refers to the process of tangling proteins in the according starting materials into solid masses or so-called curds.

Within this specification the term "plant protein isolate" refers to a set of dry powder products obtained from a plant source and having plant protein content of greater than 70 wt.-% plant protein on dry basis. Plant protein isolates are commercially available from various suppliers (for example Ingredion Incorporated) and are derived from various plants (e.g. legumes, nuts, cereals etc.).

Within this specification the term "plant protein concentrate" refers to a set of dry powder products obtained from a plant source and having a protein content from 40 wt.-% to 70 wt.-% plant protein. Plant protein concentrates are commercially available from various suppliers (for example Ingredion Incorporated) and are derived from various plants (e.g. legumes, nuts, cereals, etc.).

Within this specification the term "transglutaminase" refers to a set of enzymes that primarily catalyze the formation of a bond between γ-carboxamide groups of glutamine residue side chains and the ε-amino groups of lysine residue side chains to form crosslinks within proteins or between proteins. Transglutaminase enzymes are commercially available and are commonly sold as powdered compositions comprising bulk and flow ingredients such as maltodextrin, which, in this specification, are referred to as transglutaminase.

*Within this specification "weight percent," which is abbreviated "wt.-%," when referring to an amount of a component in a composition, unless said otherwise, refers the dry basis weight percentage, meaning the weight percent of the component relative to the total weight of the composition absent the moisture content.*

### EXPERIMENTAL SECTION

Embodiments of the application will now be described with reference to the attached drawings:
Figure 1 shows a filtered and pressed curd obtained from Comparative example 2;
Figure 2 shows a curd from Comparative example 2 pressed with increased pressure (left) during cooking and a filtered and pressed curd from Example 1 during cooking (right);
Figure 3 shows a filtered and pressed curd obtained from Example 1;
Figure 4 shows a filtered and pressed curd obtained from Example 2;
Figure 5 shows a filtered and pressed curd obtained from Example 3;
Figure 6 and 7 show filtered and pressed curds obtained from Example 4.

### Comparative example 1

500 g fava milk comprising 3 wt.-% fava protein isolate, 2.3 wt.-% sugar, 0.14 wt.-% salt, 1.8 wt.-% sunflower oil and the remaining portion water was produced mixing the dry ingredients and the oil with water in a beaker. The mixture was heated until its boiling point. After 2 minutes, the mixture was cooled down to room temperature (25° C) and 1 wt.-% magnesium chloride was added. The milk with the coagulation salt was left to cool down to 25°C. It was not possible to recover the formed coagulate.

### Comparative example 2

500 g fava milk comprising 3 wt.-% fava protein isolate, 2.3 wt.-% sugar, 0.14 wt.-% salt, 1.8 wt.-% sunflower oil and the remaining portion water was produced mixing the dry ingredients and the oil with water in a beaker. The mixture was heated until its boiling point and 1 wt.-% magnesium sulfate was added right after as long as the temperature of the mixture was still above 70°C. The milk with the coagulation salt was left to cool down and fermentation culture (Thermophilic lactic acid culture *VEGA^{™} Premium* from Chr. Hansen at 1 g/l) added after the temperature dropped to 40°C. The beaker was placed in the incubator at 40°C for 3 hours (until reaching pH 4.2-4.4).

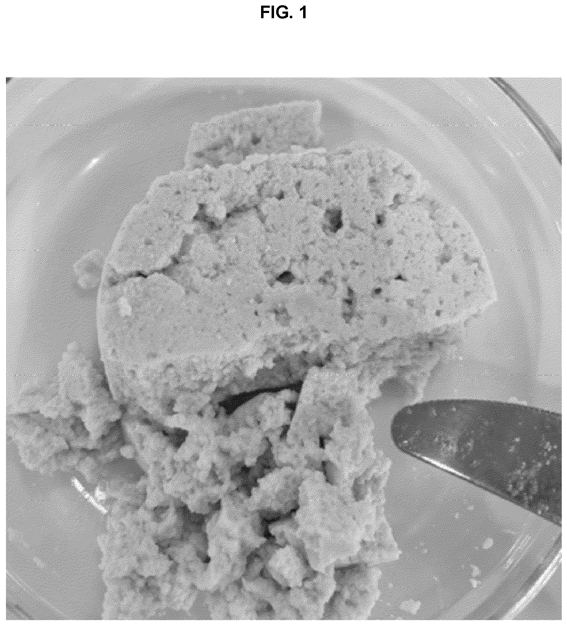

The formed curd was filtered and pressed and resulted in a product, that was fragile, moist, not sliceable and lacked cohesiveness (see Figure 1). Furthermore, it had an acidic and beany taste.

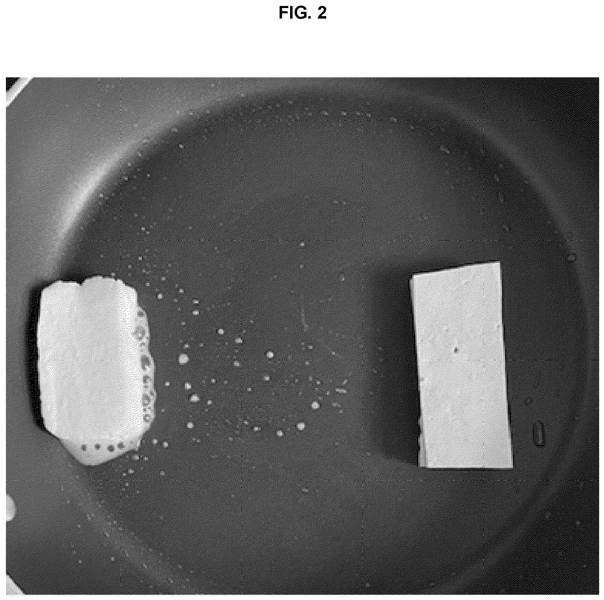

Increased pressing of the curd resulted in a more stable product (see Figure 2, left), which was not stable during cooking and released a lot of water.

### Example 1

500 g fava milk comprising 3 wt.-% fava protein isolate; 2.3 wt.-% sugar, 0.14 wt.-% salt, 1.8 wt.-% sunflower oil and the remaining portion water was produced mixing the dry ingredients and the oil with water in a beaker. The mixture was heated until its boiling point. After 2 minutes, the mixture was cooled down to room temperature (25° C) and 1 wt.-% magnesium chloride and 0.5 wt.-% transglutaminase were added. The beaker was placed in the incubator at 40°C for 3 hours.

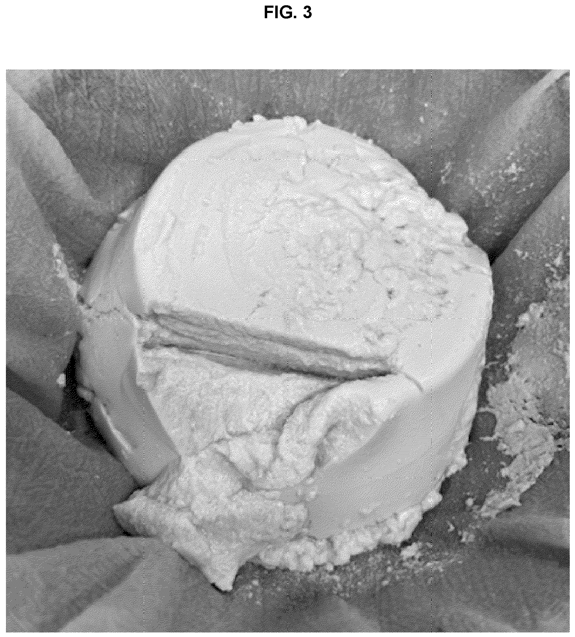

The formed curd (Figure 3) was filtered and pressed and resulted in a product, that was sliceable, springy, chewy and had reduced beany notes. The product was also stable during cooking (see Figure 2, right).

### Example 2

500 g fava milk comprising 3 wt.-% fava protein isolate, 2.3 wt.-% sugar, 0.14 wt.-% salt, 1.8 wt.-% sunflower oil and the remaining portion water was produced mixing the dry ingredients and the oil with water in a beaker. The mixture was heated until its boiling point and 1 wt.-% magnesium chloride was added right after as long as the temperature of the mixture was still above 70°C. The milk with the coagulation salt was left to cool down and fermentation culture (Thermophilic lactic acid culture *VEGA^{™} Premium* from Chr. Hansen at 1 g/l) and 0.5 wt.-% transglutaminase were added after the temperature dropped to 40°C. The beaker was placed in the incubator at 40°C for 3 hours (until reaching pH 4.2-4.4).

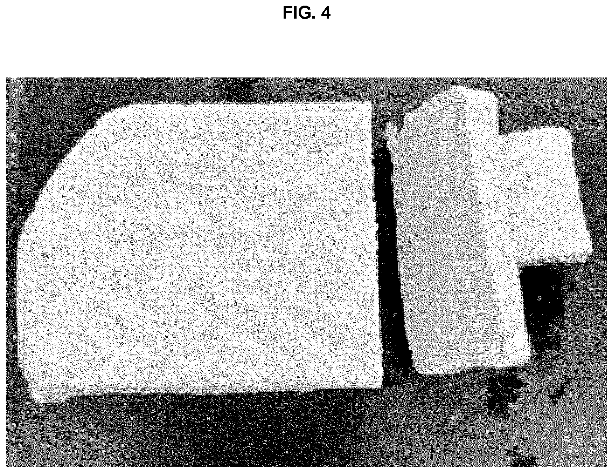

The obtained coagulate was filtered and pressed and resulted in a firm, chewy, springy product with acidic notes reducing the perception of any beany notes. The product had a homogeneous surface (see Figure 4) and was thermostable.

### Example 3

500 g fava milk comprising 3 wt.-% fava protein isolate, 2.3 wt.-% sugar, 0.14 wt.-% salt, 1.8 wt.-% sunflower oil and the remaining portion water was produced mixing the dry ingredients and the oil with water in a beaker. The mixture was heated until its boiling point. The mixture was then cooled down to room temperature (25° C) and 1 wt.-% magnesium chloride, fermentation culture (Thermophilic lactic acid culture *VEGA^{™} Premium* from Chr. Hansen at 1 g/l) and 0.5 wt.-% transglutaminase were added. The beaker was placed in the incubator at 40°C for 3 hours (until reaching pH 4.2-4.4).

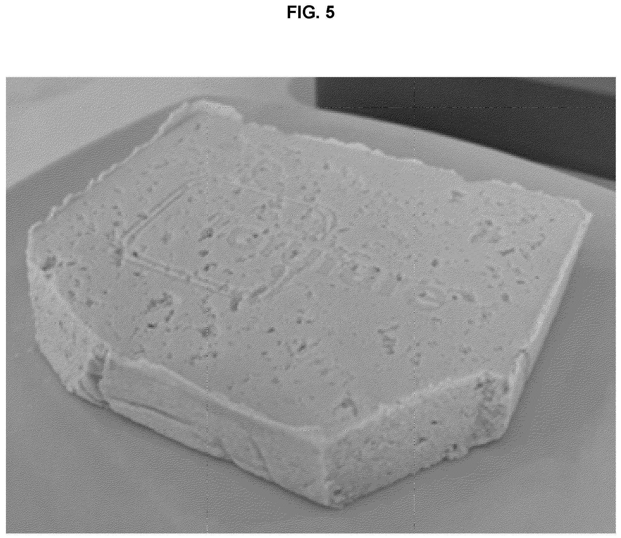

The obtained coagulate was filtered and pressed and resulted in a firm, springy, chewy product with a drier texture than the product of Example 2. The appearance was slightly softer and more fragile than the product of Example 2, but also more homogeneous (see Figure 5).

### Example 4

500 g pea milk comprising 3.5 wt.-% pea protein isolate, 2.3 wt.-% sugar, 0.14 wt.-% salt, 5.0 wt.-% coconut fat and the remaining portion water was produced mixing the dry ingredients and the oil with water in a beaker and homogenizing it in a high-speed mixing equipment. The mixture was heated until its boiling point. After 2 minutes, the mixture was cooled to 40°C and 0.05 wt.-% of a mixture of fermenting cultures comprising *VEGA^{™} Premium* (mesophilic, thermophilic), *VEGA^{™} Boost,* CR-550, C502 (mesophilic, aromatic cultures) from Chr. Hansen were added. The mixture was fermented until a pH of 6.5 was reached. Afterwards, 1.75 wt.-% magnesium sulphate and 1 wt.-% transglutaminase were added and the mixture was incubated at 25° C for 20 minutes. The obtained coagulate was cut, pre-pressed, transferred into molds, pressed, washed with brine (15% NaCl, pH = 5.4) at 15°C and dried for 24 hours at 10 °C and 75% humidity.

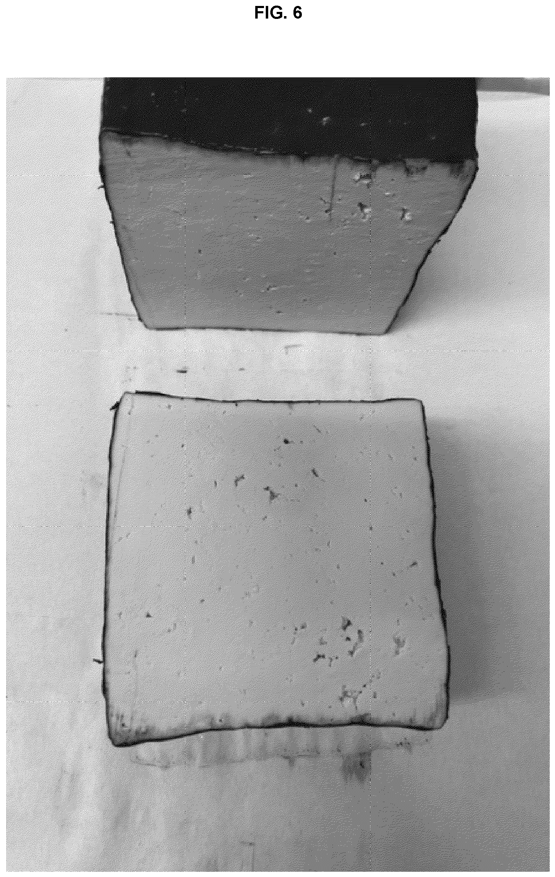

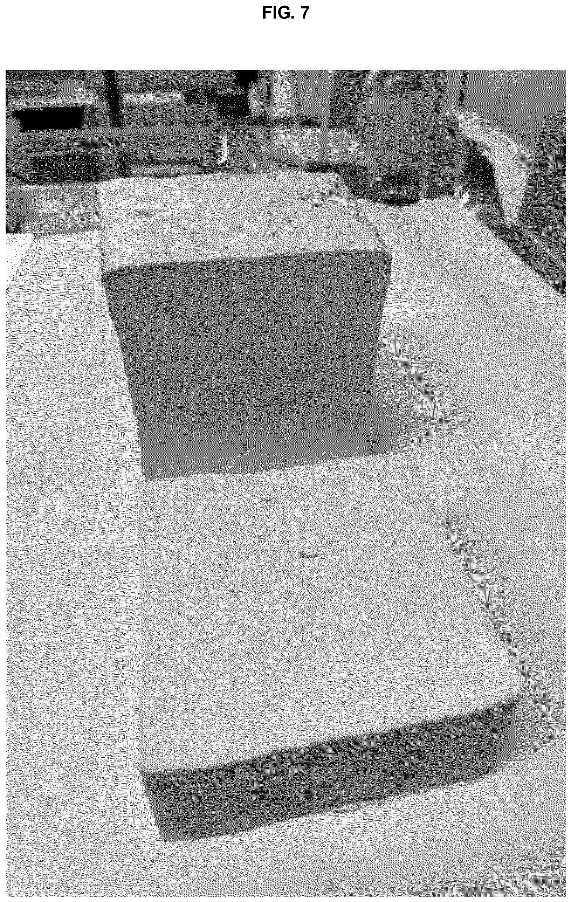

The obtained cheese mass was ripened for 4 weeks with SMEAR bacteria and wax coating or vegetarian cultures (yeast LAF TRIO, LAF-3, BL-2, SALSA-1) and resulted in a plant-based cheeses with a cheese-like texture and taste (see Figures 6+7), an approximate dry matter of 40-45% and significantly reduced off-notes such as bitterness, which are usually known for legume proteins.

## Claims

1. A method for producing plant-based milk products comprising the following steps:
a. providing a legume milk comprising a plant protein isolate or plant protein concentrate, sugar, salt, oil or fat, and water;
b. heating the legume milk to at least equal to or above 90° C and at maximum up to its boiling point;
c1. adding a coagulation salt to the heated legume milk;
d1. cooling the heated legume milk to equal to or below 55°C and adding a transglutaminase to the legume milk to form a curd;
or
c2. cooling the heated legume milk to equal to or below 55°C;
d2. adding a coagulation salt and a transglutaminase to the legume milk to form a curd;
e. filtering the curd; and
f. pressing the filtered curd to form a tofu or plant-based cheese product;
wherein the coagulation salt is a magnesium or calcium salt.

2. The method of claim 1, wherein the coagulation salt is selected from the group consisting of calcium sulfate, calcium chloride, magnesium chloride, magnesium sulfate or mixtures thereof, more preferably magnesium sulfate, magnesium chloride or mixtures thereof and most preferably magnesium sulfate.

3. The method according to any one of the preceding claims, wherein the coagulation salt is added at a concentration of between 0.2 wt.-% to 5 wt.-%., preferably between 0.5 wt.-% to 4 wt.-%, more preferably between 0.8 wt.-% to 3 wt.-% and most preferably between 1 wt.-% to 2 wt.-%.

4. The method according to any one of the preceding claims, wherein the legume milk is homogenized in a high-speed mixing equipment before heating it.

5. The method according to any one of the preceding claims, wherein the legume milk is heated to 90°C, up to 95°C or to any temperature in between.

6. The method according to any one of the preceding claims, wherein the sugar is selected from the group consisting of dextrose, maltodextrin, sucrose or mixtures thereof.

7. The method according to any one of the preceding claims, wherein the salt is sodium chloride.

8. The method according to any one of the preceding claims, wherein the components in step d1. or d2. are added when the temperature of the legume milk is equal to 40°C or lower, preferably between 20°C and 40°C, or more preferably 25°C.

9. The method according to any one of the preceding claims, wherein the curd formation in step d1. or d2. takes place at a temperature of between 40°C to 52°C.

10. The method according to any one of the preceding claims, wherein the time for the curd formation in step d1. or d2. is at least 15 minutes, preferably 15 minutes to 3 hours, more preferably 1.5 to 3 hours or most preferably 2 to 3 hours or 15 to 20 minutes.

11. The method according to any one of the preceding claims, wherein a fermenting culture is added to the legume milk before or in step d1. or d2.

12. The method according to any one of the preceding claims, wherein the obtained filtered and pressed curd is incubated at 40°C to 52°C for 1.5 to 3 hours if fermenting cultures are added or not or at 6°C for 12 to 24 hours if no fermenting cultures are added.

13. The method according to any one of the preceding claims, wherein the plant protein isolate is selected from the group consisting of pea isolate, fava isolate, or mixtures thereof, preferably pea isolate, fava isolate or mixtures thereof or the plant protein concentrate is selected from the group consisting of fava concentrate, chickpea concentrate, hemp concentrate, or mixtures thereof.

14. The method according to any one of the preceding claims, wherein the legume milk comprises 3 wt.-% to 6 wt.-% plant protein isolate.

15. The method according to any one of the preceding claims, wherein the legume milk comprises 3 wt.% to 5 wt.-% fat or oil.

16. The method according to any one of the preceding claims, wherein the fat or oil is selected from the group consisting of rapeseed oil, sunflower oil, palm oil, soy oil, coconut fat or combinations thereof, preferably from rapeseed oil, sunflower oil, palm oil, coconut fat, or combinations thereof, and more preferably from sunflower oil, coconut fat or combinations thereof.

17. The method according to any one of the preceding claims, wherein the legume milk further comprises components selected from the group consisting of soluble or insoluble fibers, starches, hydrocolloid or mixtures thereof.

18. The method according to any one of the preceding claims, wherein the curd is filtered through a cheese cloth in step e).

19. The method according to any one of the preceding claims, wherein it further comprises washing the tofu or plant-based cheese product with brine, drying it and ripening it to obtain a ripened tofu or plant-based cheese product.

20. A tofu or plant-based cheese product produced by the method of any of the preceding claims.

21. The tofu or plant-based cheese product according to claim 20, wherein it is a hard cheese, semi-hard cheese, semi-soft cheese, soft cheese, preferably a halloumi cheese or semi-hard cheddar with SMEAR bacteria.

22. Use of a magnesium salt, a transglutaminase and optionally a fermenting culture in a method for producing plant-based milk products, wherein the obtained tofu or plant-based cheese product has a firm and elastic texture, optionally compared to the same products made coagulation salt or transglutaminase or coagulation salt and fermenting culture or transglutaminase and fermenting culture.

23. The use according to claim 22, wherein it results in a superior taste of the tofu or plant-based cheese product compared to the same products made with only coagulation salt or transglutaminase or coagulation salt and fermenting culture or transglutaminase and fermenting culture, preferably in significantly less off-notes such as bitterness.
